# EUROPÄISCHE PATENTSCHRIFT

(11) **EP 2 364 587 B1**
(45) Veröffentlichungstag und Bekanntmachung des Hinweises auf die Patenterteilung: **11.12.2013**
(21) Anmeldenummer: 11150011.2
(22) Anmeldetag: 03.01.2011
(51) Int. Cl.: A01F 7/06

(54) **Axialabscheider für einen Mähdrescher**
Axial separator for a combine harvester
Séparateur axial pour une moissonneuse-batteuse

(30) Priorität: 10.03.2010 DE 102010015902
(43) Veröffentlichungstag der Anmeldung: 14.09.2011
(73) Patentinhaber: CLAAS Selbstfahrende Erntemaschinen GmbH, 33428 Harsewinkel (DE)
(72) Erfinder: Bußmann, Jens, 49179, Ostercappeln (DE)

(56) Entgegenhaltungen:
- EP-A1- 1 859 671
- EP-A2- 1 964 465
- EP-B1- 1 031 270

## Beschreibung

Die Erfindung betrifft einen Axialabscheider für einen Mähdrescher gemäß dem Oberbegriff des Anspruches 1 sowie eine Steuereinrichtung für einen Axialabscheider gemäß dem Anspruch 9.

Axialabscheider für einen Mähdrescher weisen einen Abscheiderotor auf, der drehbar in einem Gehäuse gelagert ist, welches in Förderrichtung des Abscheiderotors gesehen einen Aufnahmebereich für Erntegut, in den das von einem tangential zum Axialabscheider vorgelagerten Dreschsystem abgegebene Erntegut eingeleitet wird, einen Abscheidebereich, in dem das Erntegut von Nichtfruchtbestandteilen getrennt wird, und einen Abgabebereich für das aus Nichtfruchtbestandteilen bestehende Erntegutrestmaterial umfasst. Der Abgabebereich des Gehäuses weist hierzu eine Öffnung auf, die in Umfangsrichtung des Abscheiderotors abschnittsweise durch eine Wandung begrenzt ist. Des Weiteren ist in dem Abgabebereich im Bereich der Öffnung ein Leitelement angeordnet, welches den im Abgabebereich durch die Öffnung austretenden Erntegutreststrom, der einer unterhalb des Abgabebereiches angeordneten Weiterbehandlungseinrichtung zugeführt wird, beeinflusst.

Aus der EP 1 031 270 B1 ist eine Axialtrennvorrichtung für einen Axialmähdrescher bekannt, mit einem drehbar in einem Gehäuse gelagerten Dresch-Trennrotor, in welchem Erntegut gedroschen und anschließend von Nichtfruchtbestandteilen getrennt wird. Die einen Erntegutreststrom bildenden Nichtfruchtbestandteile werden von dem Dresch-Trennrotor in einen Abgabebereich gefördert, in welchem der Erntegutreststrom einer unterhalb des Abgabebereiches liegenden Verteileinrichtung zugeführt wird. Im Abgabebereich des den Dresch-Trennrotor umgebenden Gehäuses ist ein sich in Rotationsrichtung des Dresch-Trennrotors erstreckendes Leitelement mit sich in Gutflussrichtung verändernder Kontur am Gehäuse der Axialtrennvorrichtung starr befestigt, welches den in dem Abgabebereich austretenden Erntegutrest umlenkt.

Als nachteilig an einer Axialtrennvorrichtung gemäß dem Stand der Technik hat sich gezeigt, dass durch die starre Anordnung des Leitelementes eine gezielte Beeinflussung des Gutflusses, insbesondere in Abhängigkeit von den Ernteguteigenschaften, nur unzufriedenstellend zu realisieren ist. Gerade bei feuchtem Erntegut kommt es auf Grund der starren Befestigung des Leitelementes am Gehäuse zu einer einseitigen Verteilung der Zuführung der Erntegutreste in die nachgeordnete Weiterbehandlungseinrichtung, die auch durch eine besondere Formgebung des starr angeordneten Leitelementes, wie im genannten Stand der Technik vorgeschlagen wird, nicht kompensiert werden kann. Eine einseitige Zuführung der Erntegutreste in die Weiterbehandlungseinrichtung führt im weiteren Verlauf zu einer ungleichmäßigen Verteilung des auf dem Feld ausgebrachten Erntegutrestes.

Aus der EP 1 964 465 A2 ist eine Axial-Dresch-Trennvorrichtung bekannt, die in ihrem Abgabebereich eine positionsveränderliche Ablenkplatte zur Beeinflussung eines von der Axial-Dresch-Trennvorrichtung abgegebenen Gutstromes aufweist, die um eine koaxial zur Längsachse angeordnete Schwenkachse schwenkbar angeordnet ist. Die Position der Ablenkplatte ist durch eine Aktorik veränderbar, die von einer Steuereinrichtung angesteuert wird. Zur Beeinflussung der Gutstromabgabe wird die Platte in den Gutstrom hineingeschwenkt.

Aufgabe der vorliegenden Erfindung ist es, die Zuführung des Erntegutrestes in die Weiterbehandlungseinrichtung gezielt beeinflussen zu können. Weiterhin ist es Aufgabe der Erfindung, eine Steuereinrichtung bereitzustellen, die eine flexible Verstellung des mindestens einen Leitelementes ermöglicht, um eine Anpassung der Verteilung auf dem Feld an unterschiedliche Verteilbedingungen zu erreichen.

Diese Aufgabe wird erfindungsgemäß durch die kennzeichnenden Merkmale des Patentanspruches 1 gelöst.

Vorteilhafte Weiterentwicklungen und Ausgestaltungen sind Gegenstand der jeweiligen Unteransprüche.

Gemäß dem Anspruch 1 wird vorgeschlagen, dass das mindestens eine Leitelement in Umfangsrichtung des Gehäuses des Axialabscheiders positionsveränderbar an diesem angeordnet ist. Die Positionsveränderbarkeit des mindestens einen Leitelementes ermöglicht eine gezielte Beeinflussung des Auswurfpunktes des Erntegutrestes respektive der Abrisskante an dem Leitelement bei der Zuführung des Erntegutreststromes in eine nachgeordnete Weiterbehandlungseinrichtung. Die Öffnungsweite des Abgabebereiches lässt sich flexibel an verschiedene Ernte- und/ oder Arbeitsparameter, wie die Art oder die Feuchtigkeit des Erntegutes sowie die angestrebte Verteilung, insbesondere hinsichtlich der Schichtdicken des auszubringenden Erntegutrestes auf einem Feld, anpassen. Ein weiterer Vorteil der erfindungsgemäßen Lösung besteht darin, dass die Auslassbreite des Abgabebereiches des Axialabscheiders und die Arbeitsbreite der dem Axialabscheider nachgeordneten Weiterbehandlungseinrichtung, der der Erntegutreststrom zugeführt wird, divergieren können. Durch die erfindungsgemäße Lösung lässt sich ein Arbeitsbereich der Weiterbehandlungseinrichtung variabel beschicken, der größer als die Auslassbreite des Abgabebereiches des Axialabscheiders ist.

Vorzugsweise kann das Leitelement sich abschnittsweise in Rotationsrichtung des Abscheiderotors erstreckend auf der dem Abscheiderotor zugewandten Seite der Wandung des Gehäuses angeordnet sein.

Hierzu kann das Leitelement eine in der Wandung vorgesehene, mit der Kontur des Leitelementes korrespondierende Aussparung in Abhängigkeit von der Position des Leitelementes relativ zu der Wandung teilweise oder ganz freigeben beziehungsweise ganz bedecken.

In vorteilhafter Weiterbildung kann sich zumindest der Bereich der Wandung im Abgabebereich, an der das Leitelement angeordnet ist, bis zur Mittelebene des Abscheiderotors erstrecken. In Abhängigkeit von der Positionierung des mindestens einen Leitelementes relativ zur Wandung wird der Erntegutreststrom vor dessen Austreten aus der Öffnung im Abscheidebereich kürzer oder länger von dem Leitelement geführt. Das mindestens eine Leitelement kann dabei derart positionierbar sein, dass es abschnittsweise über die Wandung hinaus in die Öffnung des Abgabebereiches hineinragt.

Insbesondere kann das Leitelement durch eine manuelle Betätigung positionsveränderbar sein. Hierzu kann das Leitelement an parallel zu der Aussparung angeordneten Führungsschienen geführt sein, die sich im Wesentlichen in Umfangsrichtung des Gehäuses erstrecken. Jede Führungsschiene kann jeweils zumindest zwei zueinander in Umfangsrichtung beabstandete Öffnungen aufweisen, von denen zumindest eine von einem Feststellelement durchgriffen ist, welches durch Kraft- und/oder Formschluss eine Fixierung einer manuell gegenüber der Wandung eingestellten Position des Leitelementes ermöglicht. Bei dieser Variante kann eine Bedienperson die Position des mindestens einen Leitelementes durch eine manuelle Betätigung vorgeben, um den Auswurf der Erntegutreste aus dem Axialabscheider zu beeinflussen. Hierzu können die Öffnungen als Langlöcher ausgeführt sein, die eine stufenlose Verschiebung des Leitelementes ermöglichen. Alternativ hierzu kann eine Vielzahl von zueinander beabstandeten Bohrungen vorgesehen sein, die lediglich eine stufenweise Verstellung des Leitelementes gestatten.

In einer alternativen Ausführungsform kann das Leitelement durch einen elektromechanischen, hydraulischen oder pneumatischen Aktor positionsveränderbar sein. Hierzu kann das mindestens eine Leitelement mittelbar oder unmittelbar mit einem Aktor verbunden sein, der das Leitelement in verschiedene Positionen relativ zu der Wandung überführen und in diesen halten kann. Der Aktor kann hierzu von einer in der Kabine des Mähdreschers vorgesehenen Steuereinrichtung ansteuerbar sein, wodurch die Bedienperson während des Erntebetriebes entlastet wird.

Des Weiteren betrifft die vorliegende Erfindung eine Steuereinrichtung für einen Axialabscheider eines Mähdrescher, mit einem Abscheiderotor, der drehbar in einem Gehäuse gelagert ist, welches in Förderrichtung gesehen einen Aufnahmebereich für Erntegut, einen Abscheidebereich und einen Abgabebereich für Erntegutrestmaterial, eine den Abgabebereich in Umfangsrichtung des Abscheiderotors abschnittsweise begrenzende Wandung sowie mindestens ein in dem Abgabebereich angeordnetes Leitelement umfasst, welches den im Abgabebereich austretenden, einer unterhalb des Abgabebereiches angeordneten Weiterbehandlungseinrichtung zuzuführenden Erntegutreststrom beeinflusst.

Eine weitere Aufgabe der Erfindung besteht somit darin, eine Steuereinrichtung bereitzustellen, die eine gezielte Verstellung des mindestens einen Leitelementes für eine Anpassung an unterschiedliche Betriebsbedingungen ermöglicht, um eine Verteilung des Erntegutrestes auf dem Feld mit einer nahezu homogenen Schichtdicke zu erreichen.

Diese Aufgabe wird erfindungsgemäß durch die kennzeichnenden Merkmale des unabhängigen Patentanspruches 9 gelöst.

Gemäß dem Patentanspruch 9 wird vorgeschlagen, dass die Steuereinrichtung zur Ansteuerung eines Aktors zur Positionsveränderung des mindestens einen Leitelementes, welches in Umfangsrichtung des Gehäuses (18) positionsveränderbar an diesem angeordnet ist, in Abhängigkeit von mindestens einem Erntegutparameter und/oder einem Arbeitsparameter eingerichtet ist. Hierdurch lässt sich eine automatisierte Verstellung der Position des mindestens einen Leitelementes erreichen, um den Austritt des Erntegutreststromes zu beeinflussen.

Hierzu ist die Steuereinrichtung mit mindestens einem Sensor verbunden sein, der zur Bestimmung wenigstens eines Erntegutparameters und/oder zumindest eines Arbeitsparameters des Mähdreschers eingerichtet ist, und dass die Steuereinrichtung diesen mindestens einen Parameter auswertet und zur Ansteuerung des Aktors verwendet, um das Leitelement in Abhängigkeit von den bestehenden Erntebedingungen zu positionieren. Die Auswertung wenigstens eines Erntegutparameters und/oder zumindest eines Arbeitsparameters des Mähdreschers ermöglicht eine kontinuierliche Adaption der Position des mindestens einen Leitelementes an sich ändernde, sensierbare Betriebsbedingungen, um durch die gezielte Einflussnahme auf die Zuführung des Erntegutreststromes in die Weiterbehandlungseinrichtung eine homogene Verteilung des Erntegutreststromes auf dem Feldboden zu erreichen.

Vorzugsweise kann der mindestens eine Sensor als ein Sensor zur Bestimmung der Feuchtigkeit des Erntegutes vor dessen Eintritt in den Axialabscheider ausgeführt sein. In Abhängigkeit von dem Feuchtigkeitsgehalt des Ernterestgutes wird der Aktor von der Steuerungseinrichtung angesteuert, um die Position des mindestens einen Leitelementes zu variieren, wodurch einer durch das Verklumpen des Erntegutrestes im Abscheiderotor hervorgerufenen einseitigen Beschickung der Weiterbehandlungseinrichtung vorgebeugt werden kann.

Weiterhin kann der mindestens eine Sensor als ein Sensor zur Bestimmung des Durchsatzes des Erntegutes vor dessen Eintritt in den Axialabscheider ausgeführt sein.

Vorteilhafterweise kann der mindestens eine Sensor als ein Sensor zur Bestimmung der Verteilbreite des Erntegutreststromes nach dessen Austritt aus dem Axialabscheider ausgeführt sein. In Kenntnis der Verteilung des Erntegutreststromes über die Arbeitsbreite der Weiterbehandlungseinrichtung wird die Charakteristik der Zuführung durch die Positionierung des mindestens einen Leitelementes durch den Aktor verändert, um eine an die Betriebsbedingungen angepasste gleichmäßige Verteilung auf dem Feld zu erreichen.

Der zur Bestimmung der Verteilbreite des Erntegutrestes nach dessen Austritt aus dem Axialabscheider vorgesehene mindestens eine Sensor kann als ein Infrarotsensor oder Ultraschallsensor ausgeführt sein. Denkbar ist auch der Einsatz eines Radarsensors.

Alternativ oder ergänzend kann zumindest ein die Windrichtung und die Windstärke erfassender Windsensor vorgesehen sein. Hierzu werden die von dem Windsensor erfassten Daten der Steuerungseinrichtung zugeführt und ausgewertet, um von der Steuerungseinrichtung der Ansteuerung des mindestens einen Leitelementes zu Grunde gelegt werden zu können.

Eine Weiterbildung kann in dem Einsatz eines optischen Sensors in Form einer Kamera gesehen werden, wodurch eine Bild- oder Videoauswertung der Verteilbreite des Erntegutreststromes ermöglicht wird. Die Anordnung des optischen Sensors kann dabei der Erntegutweiterbehandlungseinrichtung vorgeschaltet oder nachgeschaltet sein. Die Bild- oder Videoauswertung kann durch die Steuerungseinrichtung selbst erfolgen oder durch eine separate Auswerteeinrichtung, die das Ergebnis der Steuerungseinrichtung zukommen lässt, um das mindestens eine Leitelement in entsprechender Weise in Abhängigkeit von dem Ergebnis der Bild- oder Videoauswertung der Verteilbreite ansteuern zu können.

Bei einem Einsatz von mehr als einem Sensor zur Bestimmung der Verteilbreite kann neben der Verwendung eines einzelnen Sensortyps auch eine Kombination der verschiedenen Sensortypen vorsehen sein, um eine optimierte Verteilung des Erntegutrestes auf dem Feld zu erreichen.

Die Erfindung wird nachstehend anhand eines in den Zeichnungen dargestellten Ausführungsbeispieles näher erläutert.

Es zeigen:
- Fig.1: eine schematisierte Längsschnittdarstellung eines Mähdreschers;
- Fig. 2: eine perspektivische Teilansicht eines Abgabebereiches eines Axialabscheiders gemäß Fig. 1 mit einem in einer ersten Extremposition befindlichen Leitelement;
- Fig. 3: eine perspektivische Teilansicht eines Abgabebereiches eines Axialabscheiders gemäß Fig. 1 mit einem in einer zweiten Extremposition befindlichen Leitelement;
- Fig. 4: eine schematisierte Darstellung einer Steuerungseinrichtung für einen Axialabscheider.

Die nachstehende Beschreibung der Erfindung erfolgt am Ausführungsbeispiel eines Mähdreschers mit einem Abscheiderotor, ist aber in analoger Weise auf einen Mähdrescher mit mehr als einem Abscheiderotor übertragbar.

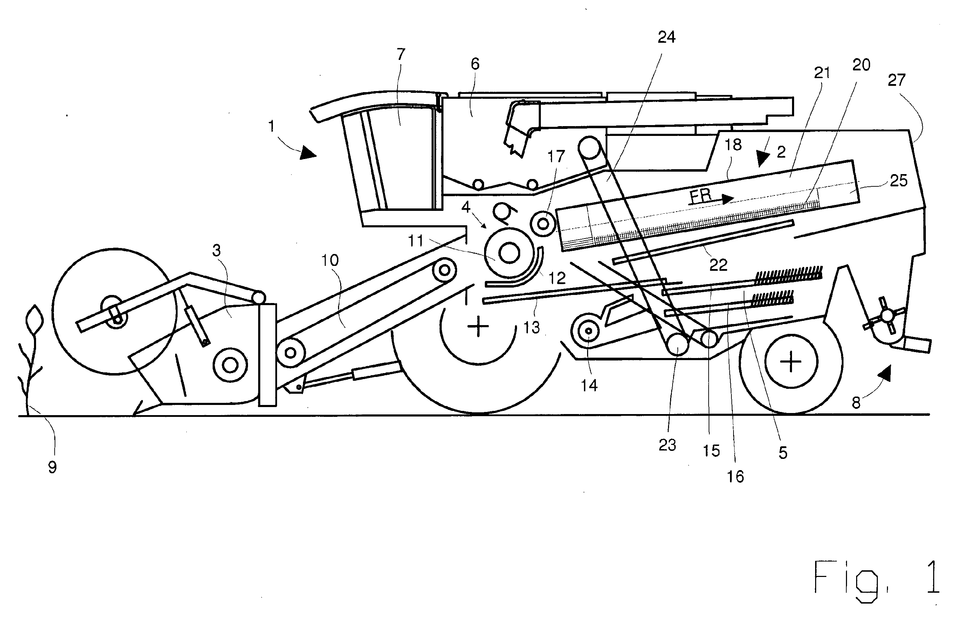

Der in Fig. 1 schematisch dargestellte Mähdrescher 1 mit einem Axialabscheider 2 besteht im Wesentlichen aus einem Schneidwerk 3, einer Drescheinrichtung 4, einer Reinigungseinrichtung 5, einem Korntank 6, einer Fahrerkabine 7 sowie aus einer dem Axialabscheider 2 nachgeordneten Weiterbehandlungseinrichtung 8 für den Erntegutreststrom, wie einen Strohhäcksler und/oder einer dem Strohhäcksler nachgeordneten Verteileinrichtung.

Das vom Schneidwerk 3 abgeschnittene Erntegut 9 gelangt über einen Schrägförderkanal 10 zu einer nach dem Tangentialprinzip arbeitenden Drescheinrichtung 4. Diese besteht aus einer Dreschtrommel 11 und einem zugeordneten Dreschkorb 12. Die am Dreschkorb 12 abgeschiedenen Erntegutbestandteile werden über einen Förderboden 13 zu einer aus einem Gebläse 14 und einem Ober- und Untersieb 15,16 bestehenden Reinigungseinrichtung 5 geleitet. Das den Dreschkorb 12 in tangentialer Richtung verlassende Korn-Kurzstroh-Gemisch wird in den Axialabscheider 2 gefördert. Der Fördervorgang wird durch eine parallel zur Dreschtrommel 11 angeordnete, rotierende Wendetrommel 17 unterstützt.

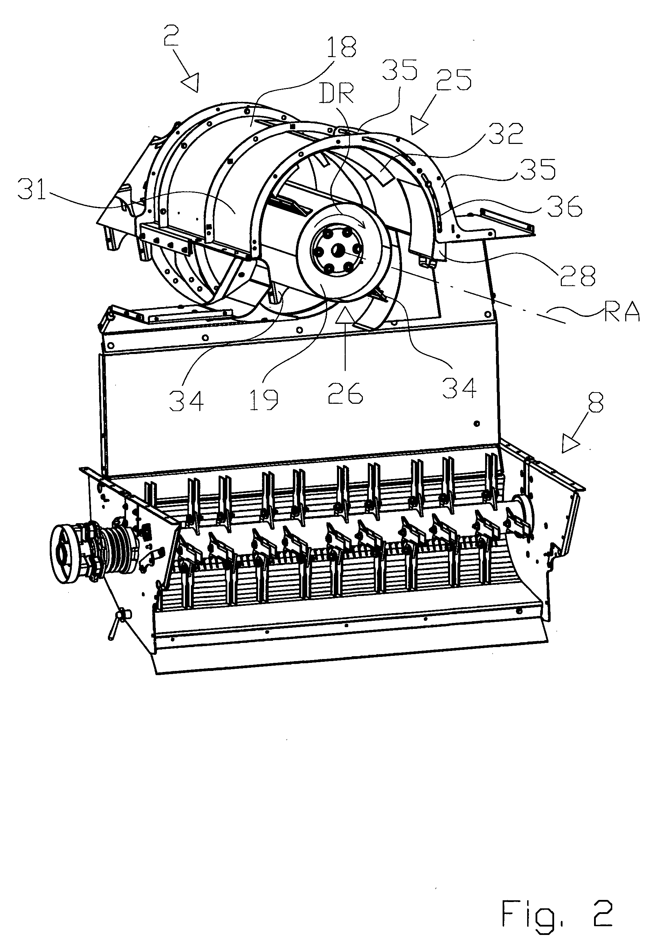

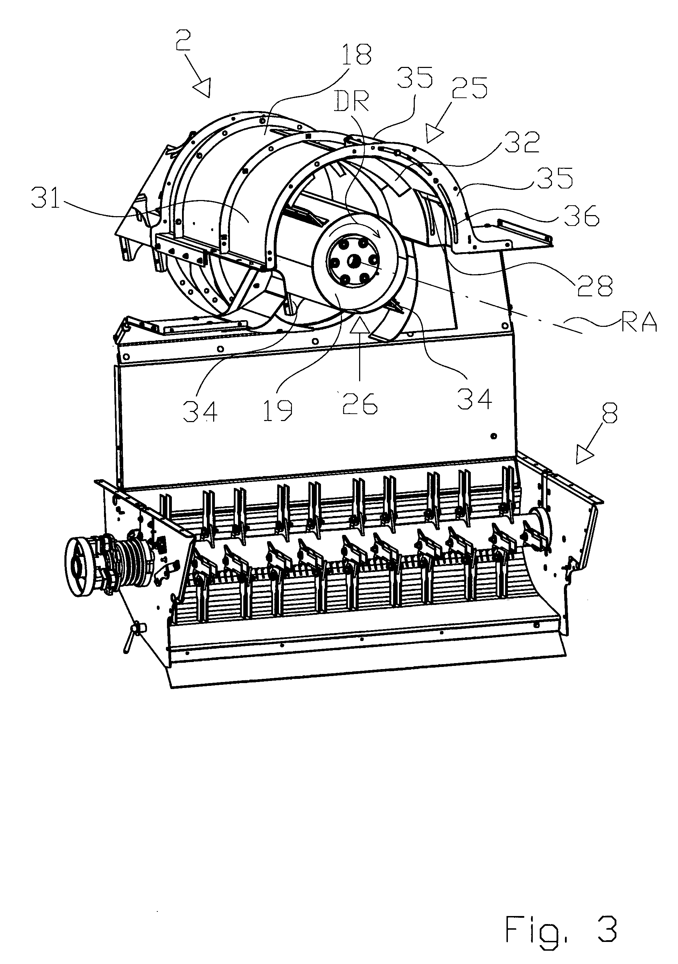

Der Axialabscheider 2 ist in Längsrichtung des Mähdreschers 1 angeordnet und besteht im Wesentlichen aus einem feststehenden, in Förderrichtung FR ansteigenden, zylindrischen Gehäuse 18, in dem ein drehbar angetriebener Abscheiderotor 19 gelagert ist. Das Gehäuse 18 weist einen unteren Bereich mit Abscheidrosten 20 und einen geschlossenen oberen Deckbereich 21 mit an der Innenseite angeordneten Leiteinrichtungen 32, wie sie in den Fig. 2 und 3 dargestellt, zur Unterstützung der Förderbewegung des Erntegutes auf. Der Umfangsbereich des Abscheiderotors 19 ist mit verschiedenartig ausgebildeten Erntegutbehandlungselementen 34, wie Leisten oder Paddeln, versehen, die den Abscheidevorgang intensivieren.

An den Abscheiderosten 20 werden die im Erntegutgemisch enthaltenen Körner sowie Anteile von Kurzstroh und Spreu abgeschieden und über den darunter liegenden Rücklaufboden 22 zur Reinigungseinrichtung 5 gefördert. Die gereinigten Körner gelangen über eine Förderschnecke 23 und einen Elevator 24 in den Korntank 6. Innerhalb des Axialabscheiders 2 wird das den Erntegutrest bildende Stroh beziehungsweise die Spreu in Richtung des Abgabebereiches 25 gefördert und gelangt von dort aus über eine Auslassbreite 26 verteilt in die Weiterbehandlungseinrichtung 8, die quer zur Fahrtrichtung an einem Rahmen unterhalb einer Strohauslaufhaube 27 befestigt ist.

In Fig. 2 ist eine perspektivische Teilansicht des Abgabebereiches 25 des Axialabscheiders 2 gemäß Fig. 1 mit einem in einer ersten Extremposition befindlichen Leitelement 28 dargestellt. Der Abgabebereich 25 weist eine der Weiterbehandlungseinrichtung 8 zugewandte, sich konzentrisch zur Längsachse RA des Abscheiderotors 19 erstreckende, abschnittsweise Öffnung des Gehäuses 18 auf, aus dem der Erntegutreststrom über die veränderbare Abgabebreite 26 austritt. Begrenzt wird die Öffnung in dem Abgabebereich 25 in radialer Richtung durch eine Wandung 31 des Gehäuses 18. Das Gehäuse 18 ist auf seiner dem Abscheiderotor 19 zugewandten Innenseite mit sich radial nach innen erstreckenden, wendel- oder spiralförmig angeordneten Leiteinrichtungen 32 ausgeführt, die die in dem Axialabscheider 2 zu transportierenden Erntegutreste in Förderrichtung FR bis zum Abgabebereich 25 führen.

Das den Abscheiderotor 19 umgebende Gehäuse 18 weist im Abgabebereich 25 mindestens ein in Umfangsrichtung des Gehäuses 18 positionsveränderbares Leitelement 28 auf. Hierzu ist das mindestens eine Leitelement 28 sich abschnittsweise in Rotationsrichtung DR des Abscheiderotors 19 erstreckend auf der dem Abscheiderotor 19 zugewandten Seite der Wandung 31 des Gehäuses 18 angeordnet. Das mindestens eine Leitelement 28 ist vorzugsweise an der Wandung 31 des Gehäuses 18 angeordnet. Hierzu ist wenigstens eine mit der Kontur des Leitelementes 28 korrespondierende Aussparung in der Wandung 31 vorgesehen, die von dem mindestens einen Leitelement 28 abdeckbar ist. Die Aussparung kann in Abhängigkeit von der Position des Leitelementes 28 relativ zur Wandung 31 teilweise oder ganz freigegeben beziehungsweise ganz bedeckt werden. Letztere Extremposition, in der die Aussparung ganz bedeckt ist, ist in Fig. 2 dargestellt. Eine vorteilhafte Weiterbildung der Erfindung sieht vor, dass im Abgabebereich 25 auch zwei oder mehr positionsveränderbare Leitelemente 28 nebeneinander in der Wandung 31 des Gehäuses 18 angeordnet sein können, die jeweils unabhängig voneinander positionsveränderbar sind.

Die Führung des mindestens einen Leitelementes 28 erfolgt beispielsweise durch auf der dem Abscheiderotor 19 abgewandten Außenseite des Gehäuses 18 parallel zueinander angeordneten Führungsschienen 35, zwischen denen das Leitelement 28 in Umfangsrichtung verschiebbar gehalten und in vorgebbaren Positionen feststellbar ist. Hierzu weisen die senkrecht zur Oberfläche des Gehäuses 18 angeordneten Führungsschienen 35 beispielsweise Langlöcher 36 auf, die von Feststellelementen wie Schrauben oder dergleichen durchgriffen sind, mit deren Hilfe das Leitelement 28 in einer manuell wählbaren Position festlegbar ist. Alternativ ist die Positionsveränderung des mindestens einen Leitelementes 28 durch einen Aktor 38 durchführbar, der mit einer Steuereinrichtung 37 verbunden ist, wie weiter unten ausgeführt wird.

In Fig. 3 ist eine perspektivische Teilansicht des Abgabebereiches 25 des Axialabscheiders 2 gemäß Fig. 1 mit einem in einer zweiten Extremposition befindlichen Leitelement 28 dargestellt. In dieser zweiten Extremposition ist die wenigstens eine Aussparung vollständig freigegeben, so dass der Erntegutreststrom zumindest anteilig zu einem früheren Zeitpunkt und unter einem anderen Winkel als in der ersten Extremposition, in der die Aussparung vollständig bedeckt ist, im Abgabebereich 25 austreten und der nachgeordneten Weiterbehandlungseinrichtung 8 zugeführt werden kann.

Wie weiter oben bereits ausgeführt wurde, ist das mindestens eine Leitelement 28 in seiner Position relativ zu der Wandung 31 frei verstellbar, so dass unterschiedliche Winkel für den Auswurf des Erntegutreststromes sowie verschiedene Positionen der Abrisskante des Leitelementes 28 einstellbar sind. Eine Anordnung von zwei oder mehr Leitelementen 28 in einer oder mehreren Aussparungen nebeneinander ermöglicht unter anderem eine Abstaffelung des Auswurfwinkels beziehungsweise der Positionen der Abrisskante durch eine unterschiedliche Positionierung der einzelnen Leitelemente 28 zueinander.

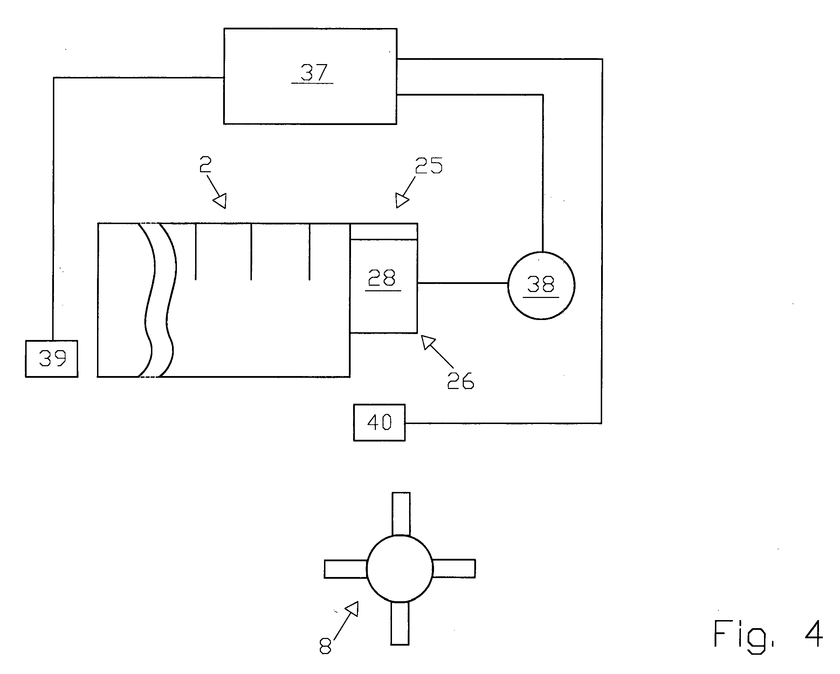

In Fig. 4 ist schematisch eine Steuereinrichtung 37 für einen Axialabscheider 2 dargestellt, die zur Ansteuerung eines Aktors 38 zur Positionsveränderung des mindestens einen konzentrisch zur Längsachse RA des Abscheiderotors 19 angeordneten Leitelementes 28 in Abhängigkeit von wenigstens einem Erntegutparameter und/oder zumindest einem Arbeitsparameter eingerichtet ist. Hierzu kann die Steuereinrichtung 37 als eine separate, am Mähdrescher 1 angeordnete Vorrichtung ausgeführt oder in eine übergeordnete Steuerungsvorrichtung des Mähdreschers 1 integriert sein. Die Steuereinrichtung 37 steht über ein Kommunikationsmittel, wie ein Bussystem oder ein drahtloses Sender-Empfänger-System, mit dem Aktor 38 in Verbindung, um diesen derart anzusteuern, dass das mindestens eine Leitelement 28 in seiner Position relativ zur Wandung 31 veränderbar ist. Bei dem Aktor 38 kann es sich um einen elektromechanisch, einen hydraulisch oder einen pneumatisch betätigbaren Aktor 38 handeln.

Des Weiteren ist die Steuereinrichtung 37 durch das Kommunikationsmittel mit mindestens einem Sensor 39, 40 verbunden, der zur Erfassung des wenigstens einen Erntegutparameters - und/ oder Arbeitsparameters des Mähdreschers 1 eingerichtet ist. In der dargestellten Ausführungsform ist der Sensor 39 als ein Sensor zur Bestimmung der Feuchtigkeit des Erntegutes vor dessen Eintritt in den Axialabscheider 2 ausgeführt. Alternativ kann der Sensor 39 als Sensor zur Bestimmung des Durchsatzes des Erntegutes vor dessen Eintritt in den Axialabscheider 2 ausgeführt sein. Der Sensor 40 ist als ein Sensor zur Bestimmung der Verteilbreite des Erntegutreststromes nach dessen Austritt im Abgabebereich 25 aus dem Axialabscheider 2 ausgeführt. Die von den Sensoren 39, 40 erfassten Parameterdaten werden von der Steuereinrichtung 37 erfasst und ausgewertet, um die Position des mindestens eine Leitelementes 28 in Abhängigkeit von dem aktuell erfassten, mindestens einen Erntegutparameter und/oder Arbeitsparameter derart anzupassen, dass entsprechend den gegebenen Betriebsbedingungen, wie der Fahrt auf dem ebenen Feld oder bei einer Hangfahrt, eine gleichmäßige Verteilung des Erntegutrestes auf dem Feld mit annähernd homogener Schichtdicke erreicht wird.

Die angestrebte Verteilbreite des Erntegutrestes auf dem Feld entspricht nahezu der Breite des Schneidwerkes 3 und erfolgt quer zu der Längsachse des Mähdreschers 1, um auf jeder Stelle des abgeernteten Feldes Erntegutreste zu verteilen. Während der Verteilung auf dem Feld wird zu der Bestandskante ein vorgebbarer Abstand eingehalten, um bei Seitenwind oder Hangfahrt keine Erntegutreste in den noch abzuerntenden Bestand einzubringen. Daraus resultiert jedoch bei einer gleichmäßigen Beschickung über die Zuführbreite der Weiterbehandlungseinrichtung 8 eine ungleichmäßige Schichtdicke des Erntegutrestes auf dem Feldboden, da der Verteilbereich zwischen der Längsachse und der Bestandskante schmaler ist, als der Verteilbereich auf der der Bestandskante abgewandten Seite der Längsachse des Mähdreschers 1. Diesem Effekt kann erfindungsgemäß dadurch entgegengewirkt werden, dass das mindestens eine Leitelement 28 derart in seiner Position verändert wird, dass die mengenmäßige und räumliche Verteilung bei der Zuführung des Erntegutrestes in die Weiterbehandlungseinrichtung 8 gezielt angepasst wird, um innerhalb der jeweiligen Verteilbereiche gleiche Schichtdicken unabhängig von der Verteilbreite auf dem Feldboden in dem jeweiligen Verteilbereich zu erreichen. Hierzu wird der Aktor 38 in Abhängigkeit von den erfassten Daten des hinter dem Axialabscheider 2 angeordneten Sensors 40 durch die Steuereinrichtung 37 angesteuert, um die Position des mindestens einen Leitelementes 28 entsprechend zu verändern.

Die Messung der Feuchtigkeit und/oder des Durchsatzes des Erntegutes vor dessen Eintritt in den Axialabscheider 2 durch den Sensor 39 dient dazu, auf ein zu erwartendes Verklumpen des Erntegutrestes bei einem hohen Feuchtigkeitsgehalt beziehungsweise eine ungleichmäßige Zuführung in den Axialabscheider 2 reagieren zu können, um eine einseitige Beschickung der Weiterbehandlungseinrichtung 8 zu vermeiden, was zu einer ungleichmäßigen Verteilung mit inhomogener Schichtdicke auf dem Feldboden führen würde.

**Bezugszeichenliste**

| | | | |
|---|---|---|---|
| 1 | Mähdrescher | 21 | Deckbereich |
| 2 | Axialabscheider | 22 | Rücklaufboden |
| 3 | Schneidwerk | 23 | Förderschnecke |
| 4 | Drescheinrichtung | 24 | Elevator |
| 5 | Reinigungseinrichtung | 25 | Abgabebereich |
| 6 | Korntank | 26 | Auslassbreite |
| 7 | Fahrerkabine | 27 | Strohauslaufhaube |
| 8 | Strohhäcksler | 28 | Leitelement |
| 9 | Erntegut | 29 | Weiterbehandlungseinrichtung |
| 10 | Schrägförderkanal | | |
| 11 | Dreschtrommel | 31 | Wandung |
| 12 | Dreschkorb | 32 | Leiteinrichtung |
| 13 | Förderboden | | |
| 14 | Gebläse | 34 | Erntegutbehandlungselement |
| 15 | Obersieb | 35 | Führungsschiene |
| 16 | Untersieb | 36 | Langloch |
| 17 | Wendetrommel | 37 | Steuereinrichtung |
| 18 | Gehäuse | 38 | Aktor |
| 19 | Abscheiderotor | 39 | Sensor |
| 20 | Abscheidrost | 40 | Sensor |
| | | FR | Förderrichtung |
| | | RA | Rotorachse |

## Patentansprüche

1. Axialabscheider (2) für einen Mähdrescher (1), mit einem drehbar in einem Gehäuse (18) gelagerten Abscheiderotor (19), welches in Förderrichtung (FR) gesehen einen Aufnahmebereich für Erntegut, einen Abscheidebereich und einen Abgabebereich (25) für Erntegutrestmaterial, eine den Abgabebereich (25) in Umfangsrichtung des Abscheiderotors (19) abschnittsweise begrenzende Wandung (31) sowie mindestens ein in dem Abgabebereich (25) angeordnetes Leitelement (28) umfasst, welches den im Abgabebereich (25) austretenden, einer unterhalb des Abgabebereiches (25) angeordneten Weiterbehandlungseinrichtung (8) zuzuführenden Erntegutreststrom beeinflusst,
**dadurch gekennzeichnet, dass**
das mindestens eine Leitelement (28) in Umfangsrichtung des Gehäuses (18) positionsveränderbar an diesem angeordnet ist.

2. Axialabscheider (2) nach Anspruch 1, **dadurch gekennzeichnet, dass** das Leitelement (28) sich abschnittsweise in Rotationsrichtung (DR) des Abscheiderotors (19) erstreckend auf der dem Abscheiderotor (19) zugewandten Seite der Wandung (31) des Gehäuses (18) angeordnet ist.

3. Axialabscheider (2) nach Anspruch 2, **dadurch gekennzeichnet, dass** das Leitelement (28) eine in der Wandung (31) vorgesehene, mit der Kontur des Leitelementes (28) korrespondierende Aussparung in Abhängigkeit von der Position des Leitelementes (28) relativ zur Wandung (31) teilweise oder ganz freigibt beziehungsweise ganz bedeckt.

4. Axialabscheider (2) nach einem der Ansprüche 2 oder 3, **dadurch gekennzeichnet, dass** das Leitelement (28) relativ zu der Wandung (31) verschiebbar ist.

5. Axialabscheider (2) nach einem der Ansprüche 1 bis 4, **dadurch gekennzeichnet, dass** sich zumindest der Bereich der Wandung (31) im Abgabebereich (25), an der das Leitelement (28) angeordnet ist, bis zur Mittelebene des Abscheiderotors (19) erstreckt.

6. Axialabscheider (2) nach einem der Ansprüche 1 bis 5,
**dadurch gekennzeichnet, dass** das Leitelement (28) durch eine manuelle Betätigung positionsveränderbar ist.

7. Axialabscheider (2) nach einem der Ansprüche 1 bis 5,
**dadurch gekennzeichnet, dass** das Leitelement (28) durch einen elektromechanischen Aktor positionsveränderbar ist.

8. Axialabscheider (2) nach einem der Ansprüche 1 bis 5,
**dadurch gekennzeichnet, dass** das Leitelement (28) durch einen hydraulischen oder pneumatischen Aktor positionsveränderbar ist.

9. Steuereinrichtung (37) für einen Axialabscheider (2) eines Mähdrescher (1), mit einem drehbar in einem Gehäuse (18) gelagerten Abscheiderotor (19), welches in Förderrichtung (FR) gesehen einen Aufnahmebereich für Erntegut, einen Abscheidebereich und einen Abgabebereich (25) für Erntegutrestmaterial, eine den Abgabebereich (25) in Umfangsrichtung des Abscheiderotors (19) abschnittsweise begrenzende Wandung (31) sowie mindestens ein in dem Abgabebereich (25) angeordnetes Leitelement (28) umfasst, welches den im Abgabebereich (25) austretenden, einer unterhalb des Abgabebereiches (25) angeordneten Weiterbehandlungseinrichtung (8) zuzuführenden Erntegutreststrom beeinflusst,
**dadurch gekennzeichnet, dass**
die Steuereinrichtung (37) zur Ansteuerung eines Aktors (38) zur Positionsveränderung des mindestens einen Leitelementes (28), welches in Umfangsrichtung des Gehäuses (18) positionsveränderbar an diesem angeordnet ist, in Abhängigkeit von mindestens einem Erntegutparameter und/oder einem Arbeitsparameter eingerichtet ist, wobei die Steuereinrichtung (37) mit mindestens einem Sensor (39. 40) verbunden ist, der zur Bestimmung mindestens eines Erntegutparameters und/oder zumindest eines Arbeitsparameters eingerichtet ist, und dass die Steuereinrichtung (37) diesen mindestens einen Parameter auswertet und zur Ansteuerung des Aktors (38) verwendet.

10. Steuereinrichtung (37) nach Anspruch 9, **dadurch gekennzeichnet, dass** der mindestens eine Sensor (39, 40) zur Bestimmung der Feuchtigkeit des Erntegutes vor dessen Eintritt in den Axialabscheider (2) ausgeführt ist.

11. Steuereinrichtung (37) nach Anspruch 9, **dadurch gekennzeichnet, dass** der mindestens eine Sensor (39, 40) zur Bestimmung des Durchsatzes des Erntegutes vor dessen Eintritt in den Axialabscheider (2) ausgeführt ist.

12. Steuereinrichtung (37) nach Anspruch 9, **dadurch gekennzeichnet, dass** der mindestens eine Sensor (39, 40) zur Bestimmung der Verteilbreite des Erntegutes nach dessen Austritt aus dem Axialabscheider (2) ausgeführt ist.

13. Steuereinrichtung (37) nach Anspruch 12, **dadurch gekennzeichnet, dass** der mindestens eine Sensor (39, 40) als ein Infrarotsensor oder als ein Ultraschallsensor ausgeführt ist.

14. Steuereinrichtung (37) nach Anspruch 9, **dadurch gekennzeichnet, dass** der mindestens eine Sensor (39, 40) als ein die Windrichtung und die Windstärke erfassender Windsensor ausgeführt ist.

## Claims

1. An axial separator (2) for a combine harvester (1), comprising a separating rotor (19) which is mounted rotatably in a housing (18) and which viewed in a conveying direction (FR) includes a receiving region for crop material, a separating region and a delivery region (25) for residual crop material, a wall (31) which portion-wise delimits the delivery region (25) in the peripheral direction of the separating rotor (19), and at least one guide element (28) which is arranged in the delivery region and which influences the residual crop material flow which issues in the delivery region (25) and which is to be fed to a further processing device (8) arranged beneath the delivery region (25),
**characterised in that**
the at least one guide element (28) is arranged on the housing (18) in variable-position relationship in the peripheral direction of the housing (18).

2. An axial separator (2) according to claim 1 **characterised in that** the guide element (28) is arranged extending portion-wise in the direction of rotation (DR) of the separating rotor (19) on the side of the wall (31) of the housing (18), which wall is towards the separating rotor (19).

3. An axial separator (2) according to claim 2 **characterised in that** the guide element (28) partially or entirely exposes or entirely covers an opening which is provided in the wall (31) and which corresponds to the contour of the guide element (28), in dependence on the position of the guide element (28) relative to the wall (31).

4. An axial separator (2) according to one of claims 2 and 3 **characterised in that** the guide element (28) is displaceable relative to the wall (31).

5. An axial separator (2) according to one of claims 1 to 4 **characterised in that** at least the region of the wall (31) in the delivery region (25), on which the guide element (28) is arranged, extends as far as the central plane of the separating rotor (19).

6. An axial separator (2) according to one of claims 1 to 5 **characterised in that** the guide element (28) is variable in position by manual actuation.

7. An axial separator (2) according to one of claims 1 to 5 **characterised in that** the guide element (28) is variable in position by an electromechanical actuator.

8. An axial separator (2) according to one of claims 1 to 5 **characterised in that** the guide element (28) is variable in position by a hydraulic or pneumatic actuator.

9. A control device (37) for an axial separator (2) of a combine harvester (1), comprising a separating rotor (19) which is mounted rotatably in a housing (18) and which viewed in a conveying direction (FR) includes a receiving region for crop material, a separating region and a delivery region (25) for residual crop material, a wall (31) which portion-wise delimits the delivery region (25) in the peripheral direction of the separating rotor (19), and at least one guide element (28) which is arranged in the delivery region and which influences the residual crop material flow which issues in the delivery region (25) and which is to be fed to a further processing device (8) arranged beneath the delivery region (25),
**characterised in that**
the control device (37) is adapted to actuate an actuator (38) for varying the position of the at least one guide element (28) which is arranged on the housing (18) in variable-position relationship in the peripheral direction of the housing (18) in dependence on at least one crop material parameter and/or working parameter, wherein the control device (37) is connected to at least one sensor (39, 40) adapted to determine at least one crop material parameter and/or at least one working parameter, and that the control device (37) evaluates the at least one parameter and uses same for actuation of the actuator (38).

10. A control device (37) according to claim 9 **characterised in that** the at least one sensor (39, 40) is adapted to determine the moisture content of the crop material before it passes into the axial separator (2).

11. A control device (37) according to claim 9 **characterised in that** the at least one sensor (39, 40) is adapted to determine the through-put of the crop material before it passes into the axial separator (2).

12. A control device (37) according to claim 9 **characterised in that** the at least one sensor (39, 40) is adapted to determine the distribution width of the crop material after it issues from the axial separator (2).

13. A control device (37) according to claim 12 **characterised in that** the at least one sensor (39, 40) is in the form of an infrared sensor or an ultrasonic sensor.

14. A control device (37) according to claim 9 **characterised in that** the at least one sensor (39, 40) is in the form of a wind sensor which detects the wind direction and the wind strength.

## Revendications

1. Séparateur axial (2) pour une moissonneuse-batteuse (1), comprenant un rotor de séparation (19) qui est monté tournant dans un carter (18) et qui comprend, vu dans la direction de transport (FR), une zone de réception pour un produit de récolte, une zone de séparation et une zone de décharge (25) de la matière résiduelle de produit de récolte, une paroi (31) délimitant par secteurs la zone de décharge (25) dans la direction périphérique du rotor de séparation (19) ainsi qu'au moins un élément de guidage (28), lequel est disposé dans la zone de décharge (25) et influe sur le flux résiduel de produit de récolte qui débouche dans la zone de décharge (25) et qui doit être amené à un dispositif de traitement (8) disposé sous la zone de décharge (25), **caractérisé en ce que** ledit au moins un élément de guidage (28) est disposé sur le carter (18) avec une possibilité de réglage positionnel dans la direction périphérique de celui-ci.

2. Séparateur axial (2) selon la revendication 1, **caractérisé en ce que** l'élément de guidage (28) est disposé de manière à s'étendre par secteurs dans la direction de rotation (DR) du rotor de séparation (19) du côté de la paroi (31) du carter (18) tourné vers le rotor de séparation (19).

3. Séparateur axial (2) selon la revendication 2, **caractérisé en ce que**, en fonction de la position de l'élément de guidage (28) par rapport à la paroi (31), l'élément de guidage (28) dégage partiellement ou entièrement, respectivement recouvre entièrement un évidement ménagé dans la paroi (31) et correspondant au contour de l'élément de guidage (28).

4. Séparateur axial (2) selon une des revendications 2 ou 3, **caractérisé en ce que** l'élément de guidage (28) peut coulisser par rapport à la paroi (31).

5. Séparateur axial (2) selon une des revendications 1 à 4, **caractérisé en ce que**, dans la zone de décharge (25), au moins la zone de la paroi (31) sur laquelle l'élément de guidage (28) est disposé, s'étend jusqu'au plan médian du rotor de séparation (19).

6. Séparateur axial (2) selon une des revendications 1 à 5, **caractérisé en ce que** la position de l'élément de guidage (28) est réglable par l'intermédiaire d'une commande manuelle.

7. Séparateur axial (2) selon une des revendications 1 à 5, **caractérisé en ce que** la position de l'élément de guidage (28) est réglable par l'intermédiaire d'un actionneur électromécanique.

8. Séparateur axial (2) selon une des revendications 1 à 5, **caractérisé en ce que** la position de l'élément de guidage (28) est réglable par l'intermédiaire d'un actionneur hydraulique ou pneumatique.

9. Dispositif de commande (37) pour un séparateur axial (2) d'une moissonneuse-batteuse (1), comprenant un rotor de séparation (19) qui est monté tournant dans un carter (18) et qui comprend, vu dans la direction de transport (FR), une zone de réception pour un produit de récolte, une zone de séparation et une zone de décharge (25) de la matière résiduelle de produit de récolte, une paroi (31) délimitant par secteurs la zone de décharge (25) dans la direction périphérique du rotor de séparation (19) ainsi qu'au moins un élément de guidage (28), lequel est disposé dans la zone de décharge (25) et influe sur le flux résiduel de produit de récolte qui débouche dans la zone de décharge (25) et qui doit être amené à un dispositif de traitement (8) disposé sous la zone de décharge (25), **caractérisé en ce que** le dispositif de commande (37) est conçu pour commander un actionneur (38) qui permet de modifier la position dudit au moins un élément de guidage (28) et qui est disposé sur le carter (18) avec une possibilité de réglage positionnel dans la direction périphérique de celui-ci, en fonction d'au moins un paramètre du produit de récolte et/ou d'un paramètre de fonctionnement, le dispositif de commande (37) étant relié à au moins un capteur (39, 40) conçu pour déterminer au moins un paramètre du produit de récolte et/ou au moins un paramètre de fonctionnement, et **en ce que** le dispositif de commande (37) évalue ledit au moins un paramètre et l'utilise pour commander l'actionneur (38).

10. Dispositif de commande (37) selon la revendication 9, **caractérisé en ce que** ledit au moins un capteur (39, 40) est conçu pour déterminer l'humidité du produit de récolte avant son entrée dans le séparateur axial (2).

11. Dispositif de commande (37) selon la revendication 9, **caractérisé en ce que** ledit au moins un capteur (39, 40) est conçu pour déterminer le débit du produit de récolte avant son entrée dans le séparateur axial (2).

12. Dispositif de commande (37) selon la revendication 9, **caractérisé en ce que** ledit au moins un capteur (39, 40) est conçu pour déterminer la largeur de répartition du produit de récolte après sa sortie du séparateur axial (2) .

13. Dispositif de commande (37) selon la revendication 12, **caractérisé en ce que** ledit au moins un capteur (39, 40) est conçu sous la forme d'un capteur à infrarouge ou d'un capteur à ultrasons.

14. Dispositif de commande (37) selon la revendication 9, **caractérisé en ce que** ledit au moins un capteur (39, 40) est conçu sous la forme d'un capteur de vent détectant la direction du vent et la force du vent.
